# DEMANDE DE BREVET EUROPEEN

(11) **EP 0 603 044 A1**
(43) Date de publication de la demande: **22.06.1994**
(21) Numéro de dépôt: 93402998.4
(22) Date de dépôt: 13.12.1993
(51) Int. Cl.: A01B 3/40, A01B 3/46, A01B 15/14

(54) **Charrue réversible à châssis pivotant perpendiculairement au plan de travail**

(30) Priorité: 14.12.1992 FR 9215041
(71) Demandeur: ETABLISSEMENTS BUGNOT, F-52270 Doulaincourt Saucourt (FR)
(72) Inventeur: Bugnot, Michel, F-52270 Doulaincourt Saucourt (FR)
(74) Mandataire: Robert, Jean-Pierre

(57) **Abrégé**

La charrue réversible à corps (20) de labour symétriques comportant un bâti (2) porte-corps et une structure (1) d'attelage du bâti à un tracteur agricole, est telle que le bâti (2) est constitué par deux montants parallèles (15, 16) et par des traverses (17) s'étendant entre les montants et articulées à chacun d'eux par leurs extrémités correspondantes autour d'un axe (18, 19) perpendiculaire au plan des montants (15, 16), chaque traverse (17) formant un support de corps (20) de labour, le bâti (2) étant attelé à la structure (1) d'attelage par des moyens (120, 218, 219) d'articulation et de guidage permettant à ce bâti (2) de prendre, dans le plan des montants (15, 16) plusieurs orientations et configurations, des moyens (123, 124, 126, 128) étant prévus pour immobiliser le bâti (2) sur la structure (1) dans au moins trois de ces configurations.

## Description

La présente invention concerne une charrue notamment réversible équipée d'outils de travail symétriques, attelée à un bâti pouvant être portée, semi-portée ou traînée par un tracteur agricole et destinée à travailler dans la raie ou hors raie.

Lorsqu'il s'agit d'inverser le sens de travail dans un labour à plat, deux techniques sont aujourd'hui proposées:
- une technique ancienne qui consiste à faire tourner le bâti porte-corps de la charrue autour d'un axe sensiblement horizontal et longitudinal, situé à l'arrière du tracteur, pour mettre alternativement en service des corps droit et des corps gauche qui équipent le bâti ;
- une technique plus récente qui met en oeuvre un bâti porte-corps, pivotant autour d'un axe vertical et portant des corps symétriques. Le bâti porte-corps est en général une poutre articulée au voisinage de l'une de ses extrémités à un châssis de son attelage au tracteur, pour pouvoir pivoter entre une première position pour labourer dans un sens et une seconde position pour labourer dans l'autre sens, le pivot étant sensiblement vertical.

Les charrues à bâti porte-corps pivotant et outils symétriques présentent cependant des inconvénients.

En effet le travail du sol, et notamment le retournement de la terre n'est pas toujours conforme au goût traditionnel, à cause de la longueur forcément réduite des versoirs. Par ailleurs la mise en place de dispositifs de sécurité sur les outils symétriques travaillant sous une poutre n'est pas simple à réaliser et surtout, ces outils ne disposent pas d'une amplitude de dégagement très importante.

Dans ce genre de charrues, on peut également commander d'une part la mise en place de la poutre porte-corps inclinée à droite ou à gauche par rapport au sens d'avancement du tracteur et, d'autre part, le pivotement des corps par rapport à la poutre pour obtenir, avec l'inclinaison ci-dessus, un réglage de la largeur de travail. Il est dans ce cas pratiquement impossible de mettre en oeuvre des sécurités efficaces pour chaque outil. En outre, une structure avec un porte-corps comportant un pivot vertical est extrêmement vulnérable en regard des conditions de travail auxquelles sont soumis de tels engins. Enfin, dans ce type de machines, la mise en place de rasettes est compliquée, si bien que les charrues conçues avec une poutre porte-corps comportent de nombreuses contraintes constructives qui sont un frein à la faveur que devraient leur manifester les utilisateurs.

L'invention entend proposer une machine qui bénéficie des avantages attachés aux charrues réversibles à corps symétriques (soc et versoirs ou disques) tels qu'un poids moindre, une conduite et un transport facilités, sans en posséder les inconvénients qui tiennent à leur structure complexe et fragile.

A cet effet l'invention a donc pour objet une charrue à corps de labour symétriques comportant un bâti porte-corps et une structure d'attelage du bâti à un tracteur agricole dans laquelle le bâti est constitué par deux poutres parallèles et par des traverses s'étendant entre les poutres et articulées à chacune d'elles par leur extrémité correspondante autour d'un axe perpendiculaire au plan des poutres, chaque traverse formant un support de corps de labour, le bâti étant attelé à la structure d'attelage par des moyens d'articulation et de guidage permettant au bâti de prendre, dans le plan des montants, plusieurs orientations et configurations, et par des moyens pour immobiliser le bâti sur la structure dans au moins trois de ces configurations et orientations. Le bâti est donc en forme d'échelle avec deux montants parallèles, les traverses reliant les montants formant les porte-corps. On comprend que en déplaçant les montants l'un par rapport à l'autre parallèlement à eux-mêmes on modifie l'orientation des porte-corps par rapport au bâti et en déplaçant le bâti par rapport à la structure d'attelage, les traverses restant parallèles à elles-mêmes, on règle la largeur de travail. Cette double mobilité des corps par rapport au bâti et du bâti par rapport à la structure d'attelage est obtenue par les moyens de l'invention de manière très simple sans système complexe d'articulation et de leviers. En outre les porte-corps sont attelés aux montants formant le bâti de la charrue par deux axes d'articulation ce qui confère à cette charrue une robustesse particulièrement importante.

Il existe de nombreux mécanismes possibles pour relier le bâti en forme d'échelle déformable et la structure d'attelage.

Dans toutes les réalisations, les moyens d'articulation et de guidage comprennent au moins un pivot d'articulation perpendiculaire au plan du bâti, ce pivot étant situé entre une flèche de la structure et une traverse du bâti, au-dessus de cette traverse.

Dans un premier mode de réalisation les moyens d'articulation et de guidage comportent en outre une bielle articulée entre la structure et un montant du bâti. On forme ainsi un quadrilatère déformable entre la structure, une traverse du bâti, un montant et la bielle, dont un côté est fixe (bâti), les trois autres se déformant sous l'effet du pivotement, ce qui modifie la configuration de la charrue et sa position par rapport à la structure qui la soutient.

Dans une première variante de ce mode de réalisation, le pivot d'articulation de la bielle sur la structure est réglable en position. Ce réglage, de préférence le long de l'axe longitudinal de symétrie de la structure, permet de régler la forme finale atteinte par la charrue dans l'une ou l'autre des configurations de travail et donc la largeur de travail par soc toute chose étant égale par ailleurs.

Dans une seconde variante, on peut dans le même but faire varier la longueur de la bielle qui est à cet effet réglable.

Dans un second mode de réalisation, la structure d'attelage possède, associées à ce pivot, deux glissières chacune constituant un organe de guidage de la poutre correspondante dans un plan parallèle au plan du bâti au moment de la rotation du bâti autour de son articulation à la structure d'attelage. Ces glissières forment les moyens avec l'axe d'articulation, qui imposent une configuration au bâti. Des moyens de l'immobilisation du bâti dans chacune de ses positions et configurations possibles sont en outre prévus entre le bâti et la structure d'attelage.Pour modifier les positions et configurations du bâti, la charrue comporte entre chaque poutre du bâti et la structure d'attelage un vérin de manoeuvre du bâti par rapport à la structure qui fait également office des moyens susdits de blocage de ce bâti par rapport à cette structure dans des positions réglables.

Une variante de ce second mode de réalisation consiste à prévoir le pivot comme une tourelle montée tournante sous la structure d'attelage à laquelle le bâti est attelé.

Dans un autre variante de l'invention, le bâti est articulé à la structure d'attelage par au moins un pivot fixe et au moins un pivot mobile sur cette structure. Ainsi en déplaçant le pivot mobile par rapport au pivot fixe on engendre la déformation du bâti et le pivotement de son axe longitudinal par rapport à la structure d'attelage.

Pour modifier les positions et configurations du bâti, la charrue comporte entre chaque poutre du bâti et la structure d'attelage un vérin de manoeuvre du bâti par rapport à la structure qui fait également office des moyens susdits de blocage de ce bâti par rapport à cette structure dans des positions réglables.

La structure du bâti porte-corps en échelle déformable présente l'avantage de laisser à chaque corps la possibilité d'un grand débattement vers le haut, entre les montants, ce qui permet la mise en oeuvre de dispositifs simples de sécurité.

D'autres caractéristiques et avantages de l'invention ressortiront de la description donnée ci-après d'un exemple de réalisation et d'une variante de cet exemple.

Il sera fait référence aux dessins annexés parmi lesquels :
- la figure 1 est une vue de dessus d'une charrue portée conforme à l'invention,
- la figure 2 est une vue de dessus d'une charrue semi-portée conforme à l'invention,
- la figure 3 est un schéma vu de dessus d'une variante de réalisation d'une charrue conforme à l'invention,
- la figure 4 est un schéma vu de dessus d'une variante de réalisation de cette charrue,
- la figure 5 est une vue de dessus schématique d'un second mode de réalisation de la charrue de l'invention.

Sur chacune des figures, le sens d'avancement de la charrue est indiqué par la flèche A.

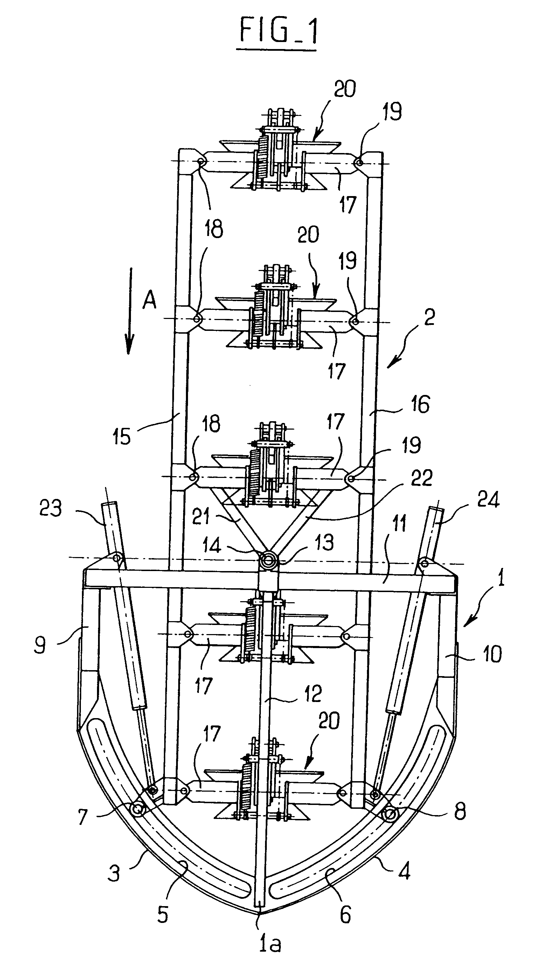

A la figure 1 on a représenté une charrue comportant essentiellement deux parties : une structure d'attelage 1 de la charrue au tracteur agricole non représenté destinée à la tracter et un bâti 2 coopérant avec la structure 1. On notera dès à présent que le bâti 2 se trouve dans un plan différent de la structure d'attelage 1, cette dernière étant située au-dessus du bâti 2.

On n'a pas représenté, pour la structure d'attelage 1, les moyens qui permettent sa liaison au tracteur et les diverses articulations que comportent ces moyens permettant à la charrue d'être portée par le tracteur et d'être de niveau par rapport au travail à réaliser. Ceux-ci, connus en eux-mêmes, prolongeraient la pointe la de cette structure 1.

Dans le mode de réalisation représenté, on remarque que la structure 1 est en forme d'un arc brisé dont les deux parties courbes 3 et 4 comportent des lumières 5 et 6 qui vont former, comme décrit ci-après, des glissières dans lesquelles seront susceptibles de se déplacer des coulisseaux 7 et 8 solidaires du bâti 2. Ces parties curvilignes 3 et 4 se rejoignent pour former la pointe la et chacune d'elles est prolongée par un jambage 9, 10 entretoisé par une traverse 11. Une flèche longitudinale médiane 12 relie la pointe la de la structure 1 à la partie médiane de la traverse 11 et se prolonge au-delà de cette traverse 11 pour porter le palier 13 d'un pivot 14. Cette flèche 12 n'est pas indispensable et le palier 13 peut être porté par une excroissance de la traverse 11.

Sous la structure 1, le bâti 2 comporte deux montants latéraux parallèles 15 et 16 réunis l'un à l'autre par une série de traverses 17. Chaque traverse 17 est articulée par chacune de ses extrémités au montant correspondant autour d'un axe 18, 19 perpendiculaire au plan que définissent les montants 15 et 16. Chaque traverse forme un support pour un corps de labour, ici un outil symétrique 20 qui s'étend sous chaque traverse.

Dans le mode de réalisation représenté à la figure 1, la traverse centrale 17 comporte une extension formée par deux bras 21, 22 à l'extrémité commune desquels est situé le pivot 14. Le pivot 14 étant logé dans le palier 13, on a réalisé ici une première liaison entre la structure 1 et le bâti 2.

En outre chaque extrémité avant des montants 15 et 16 est équipée pour le montant 15 du coulisseau 7 et pour le montant 16 du coulisseau 8, ces coulisseaux 7 et 8 étant guidés dans les glissières 5 et 6 imposent une déformation du bâti 2 lorsqu'il tourne dans le palier 13.

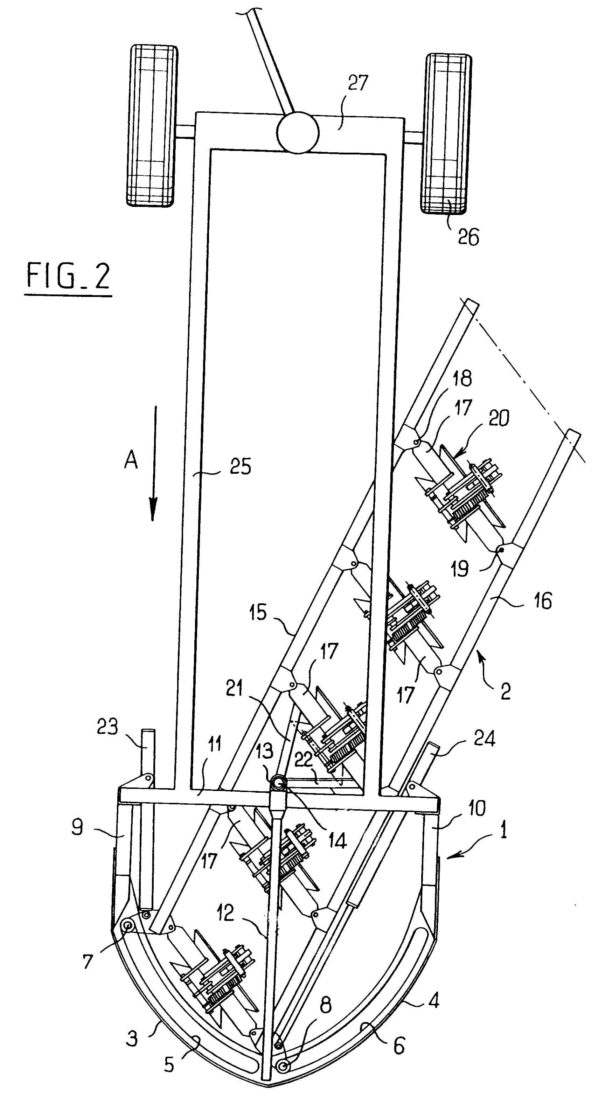

La figure 2 illustre une déformation possible de ce bâti qui conduit à placer les corps de labour dans une position de travail correcte. Bien entendu, les glissières 5 et 6 sont de forme conjuguée pour qu'il n'y ait aucune impossibilité pour les coulisseaux 7 et 8 de décrire les glissières lorsque le bâti 2 tourne dans le palier 13. Il existe d'ailleurs plusieurs formes conjuguées possibles pour les glissières 5 et 6 selon les configurations du bâti 2 que l'on souhaite obtenir.

On pourrait imaginer des moyens de commande en rotation du bâti 2 qui soient par exemple un moteur d'entraînement du pivot 14 dans l'axe 13, ce moteur étant porté par la structure d'attelage 1. Dans la réalisation représentée, ces moyens sont constitués par deux vérins 23 et 24 symétriques de part et d'autre du bâti 2 et articulés à l'extrémité des jambages 9 et 10 de la structure 1 et par l'extrémité de leur tige aux coulisseaux 7 et 8.

Dans une variante de réalisation non représentée il est possible de faire varier la forme des glissières 5 et 6 de manière simple en prévoyant une traverse 11 télescopique et une articulation des parties curvilignes 3 et 4 entre elles et sur un élément de flèche 12 au niveau de la pointe la. La flèche devrait également coulisser par rapport à la traverse, perpendiculairement à celle-ci. Bien entendu, il conviendrait de disposer de moyens connus en eux-mêmes pour bloquer les articulations et les liaisons coulissantes existant entre chaque élément de la structure 1 lorsqu'elle aurait atteint la forme désirée. Chaque forme obtenue correspondrait à une configuration particulière du bâti 1 et par l'expérience, on pourrait tout à fait déterminer deux ou trois formes possibles de la structure 1 pour obtenir deux ou trois configurations distinctes du bâti 2 pour par exemple faire varier la largeur de travail pour une inclinaison donnée des corps de labour ou au contraire à largeur de travail égale pour faire varier l'inclinaison des corps de labour en fonction de la nature du sol rencontré.

Il est également possible de dessiner dans une structure d'attelage 1 fixe des glissières 5 et 6 dont la forme conjuguée permette, selon les plages dans lesquelles sont situés les coulisseaux 7 et 8, d'obtenir les configurations du bâti 2 évoquées ci-dessus.

A la figure 2 on retrouve la plupart des éléments déjà décrits avec les mêmes références, le bâti 2 étant dans une position de travail. La structure d'attelage 1 comporte une extension arrière 25 qui permet de rendre la charrue semi-portée avec un essieu arrière 26 qui roule sur le labour, la prolongation 25 étant destinée à l'attelage au moyen de sa traverse arrière 27, d'un outil complémentaire de travail du sol tel qu'un rouleau, une herse, un semoir. Cette extension arrière permet de faciliter les manoeuvres de rotation de l'équipage mobile (charrue plus outil complémentaire) grâce à l'essieu qu'elle comporte qui, à l'encontre d'un préjugé très fort, roule sur le sol labouré. Une telle structure 1 avec prolongation arrière s'étend bien entendu dans un plan au-dessus du plan du bâti 2. L'essieu 26 sera attelé à la structure 25 au moyen d'organes élévateurs permettant de régler la profondeur de travail et d'élever les corps pour le transport de la charrue. La structure de l'essieu 26 peut également comporter des moyens élévateurs pour soulever l'outil complémentaire au-dessus du sol lors des manoeuvres. Enfin le pivot du bâti sur la structure d'attelage, ici représenté comme à la figure 1, peut être disposé à d'autres endroits le long de la prolongation 25 de la structure en fonction du type de travail que l'on souhaite réaliser au moyen de la charrue.

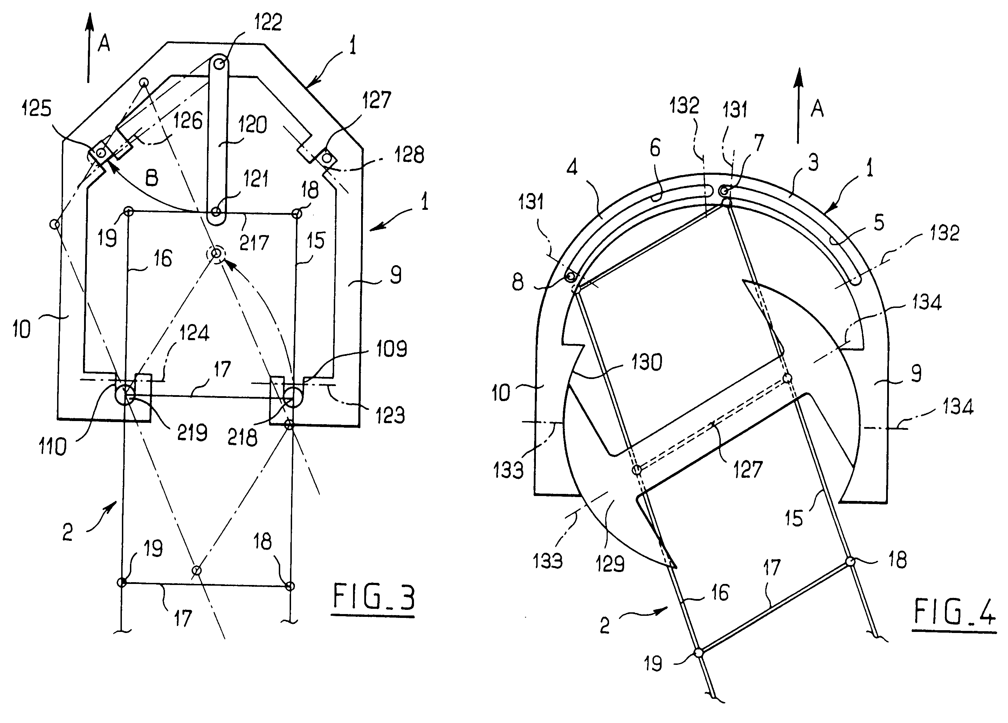

Les figures 3 et 4 sont les schémas de deux variantes de réalisation de la charrue selon l'invention vue de dessus. On retrouve sur ces schémas certains des éléments déjà décrits avec les mêmes références.

A la figure 3 la structure 1 est sensiblement en forme de fer à cheval. Chaque jambage 9 et 10 possède à son extrémité un logement 109 et 110 capable de recevoir à rotation un pivot 218, 219 du bâti 2 d'axe vertical confondu avec l'axe 18, 19 d'articulation d'une traverse 17 aux montants 15 et 16. Le bâti 2 comporte une entretoise d'extrémité 217 articulée à l'avant des montants 15 et 16 et articulée en son milieu à l'extrémité arrière d'une bielle 120 par un axe pivot 121. L'autre extrémité de la bielle 120 est articulée à l'avant de la structure 1 autour d'un axe vertical 122 situé dans le plan médian de cette structure.

Des moyens de verrouillage de chaque pivot 218, 219 dans son logement 109, 110 sont représentés par les traits mixtes 123, 124. En agissant sur ces moyens, on peut libérer chaque pivot de son logement.

En trait plein, le bâti 2 est représenté dans sa position de transport, les deux pivots 218, 219 étant maintenus verrouillés dans leur logement 109, 110.

En trait mixte, le bâti 2 est dans sa position de travail labour à gauche. Pour atteindre cette position et y être maintenu, on libère le pivot 218 de son logement 109 et on fait tourner la bielle 120 autour de son articulation 122 sur la structure 1 comme indiqué par la flèche B. Le bâti 2 tourne par rapport à la structure autour du pivot 219 dans son palier 110 en même temps qu'il se déforme. Une prolongation supérieure de l'axe 121 est alors immobilisée dans un logement 125 de la structure 1 au moyen d'un verrou symbolisé par le trait mixte 126. Pour un labour à droite, à partir de la position de transport, c'est le pivot 219 qui est libéré, la bielle 120 tourne dans l'autre sens et la prolongation du pivot 121 est reçue par un logement 127 où il peut être retenu par un verrou 128.

Dans cette variante de réalisation, les moyens d'articulation et de guidage du bâti 2 dans son mouvement par rapport à la structure 1 sont constitués par un pivot fixe 218 ou 219 et par un pivot mobile 121 du fait qu'il est porté par une bielle 120 oscillante par rapport à la structure 1.

A la figure 4, la structure 1 est semblable au mode de réalisation représenté aux figures 1 et 2. La différence réside dans l'articulation du bâti 2 à la structure 1 qui est réalisée au moyen d'une tourelle 129 pouvant pivoter autour de son axe vertical dans un palier 130 de la structure. Le bâti 2 est solidaire de la tourelle 129 par l'une de ses traverses 17 à l'extrémité de laquelle les montants 15 et 16 restent articulés.

On n'a pas représenté sur ces figures les moyens moteurs permettant la manoeuvre du bâti par rapport à la structure. Ceux-ci peuvent être constitués soit par des vérins hydrauliques, soit par des moteurs d'entraînement de la bielle ou de la tourelle. Les traits mixtes 131, 132, 133 et 134 symbolisent des moyens de verrouillage du bâti 2 sur la structure 2 dans chacune des trois positions de travail (gauche, droite) et de transport.

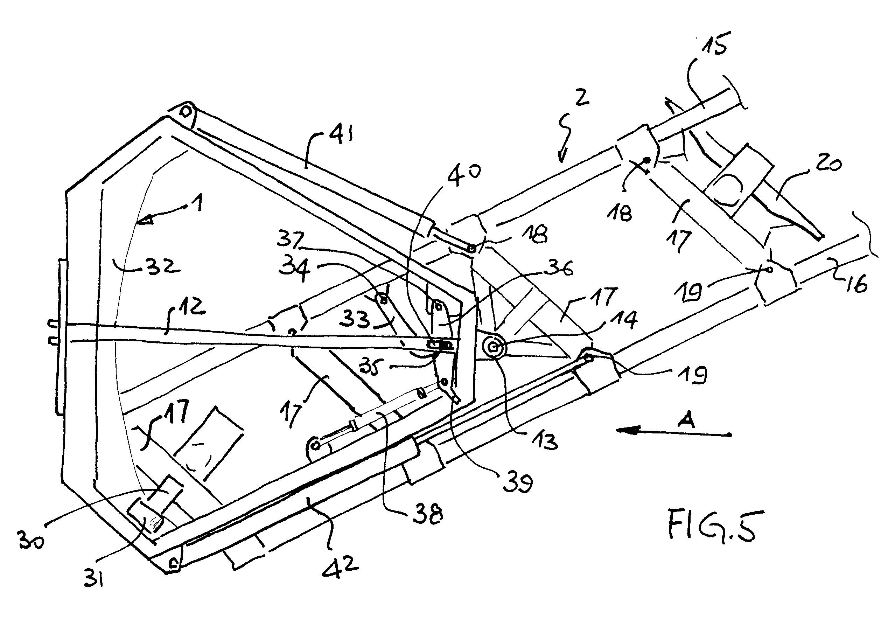

A la figure 5 on retrouve la plupart des éléments déjà décrits en regard des figures 1 et 2 avec les mêmes références.

La structure 1 est triangulaire, sa base étant cette fois tournée vers le tracteur et son sommet portant le pallier 13 du pivot 14. Le bâti 2 comporte donc deux montants 15 et 16 réunis par des traverses 17 articulées en 18 et 19.

Le pivot 14 et porté par la troisième traverse 17 à l'extrémité commune des bras 21 et 22.

La première traverse porte un nez supérieur 30 équipé d'un galet 31 qui peut rouler sur une piste 32 de la structure 1 bordant le côté intérieur de sa base proche du tracteur, lors du pivotement du bâti 2 par rapport à la structure 1. Ce galet peut être remplacé par un patin de glissement. Le nez constitue un soutien du bâti par la structure et peut être complété par un nez inférieur équipé également d'un galet pour prendre appui sous la piste 32 de la structure 2. Une bielle 33 s'étend entre le montant 15 sur lequel elle est articulée en 34 et la structure 1 au voisinage du pallier 13, sur laquelle elle est articulée autour d'un axe 35.

En fait, l'axe 35 est porté par un levier 36 qui est articulé sur la structure en 37 et dont la position angulaire autour de cet axe 37 est réglable grâce à un vérin ou tirant à vis 38 de longueur réglable. L'extrémité 39 du levier 36 peut glisser sur la structure 1.

En raccourcissant ou en augmentant la longueur du tirant 38 (il est à la figure représenté dans son état d'élongation maximale) on déplace l'axe 35 le long d'un arc de cercle centré en 37 et pratiquement le long d'un segment de l'axe de symétrie de la structure 2 sous la flèche 12.

Ainsi on crée un quadrilatère déformable dont les sommets sont les axes de pivotement 14, 18 (pour la troisième traverse) 17 34 et 35. Le côté 34-35 de ce quadrilatère est de longueur modifiable grâce au levier 36.

Dans une variante de réalisation du moyen de réglage de la position de l'articulation 35 de la bielle 33 à la structure 1, on peut remplacer le levier 36 par une simple lumière 40 dans la flèche 12 où une extrémité supérieure de l'axe 35 est logée, guidée et fixée, les extrémités de cette lumière constituant les limites du réglage possible de la charrue avec la bielle 33.

La manoeuvre du bâti 2 par rapport à la structure 1 est assurée par deux vérins 41 et 42 articulés d'une part aux extrémités du côté de base de la structure 1 et d'autre part à la troisième traverse 17 en particulier au niveau de ses axes 18 et 19 d'articulation 17.

A la figure 5, le vérin 41 est au maximum de sa rétraction tandis que le vérin 42 est au maximum de son élongation. Dans cette position ils constituent les organes de verrouillage de la charrue dans une position de travail. On notera que dans la pratique un seul vérin peut suffire. L'état inversé de ces vérins fixe la charrue dans sa seconde position de travail. En équipant de manière connue les vérins avec des butées réglables de fin de courses aux vérins on peut modifier ces positions c'est-à-dire l'inclinaison des corps 20 de labour par rapport au sens d'avancement A, donc de l'adapter à la nature du sol à travailler.

A propos de la position de l'axe 35, on indiquera que pour une inclinaison donnée des corps 20, l'éloignement de l'axe 35 de l'axe 14 en raccourcissant le tirant 38 de réglage diminue la largeur de travail. Pour une position de l'axe 35 relativement proche du pivot 14, on peut avec une petite variation de la position de l'axe 35 obtenir une assez grande variation de la largeur de travail.

Ce réglage peut également être au moins partiellement obtenu en préoyant une bielle 33 de longueur ajustable. Le résultat ne serait cependant pas symétrique et cette variante ne s'appliquerait bien que pour un charrue non réversible.

On comprend que la charrue de l'invention présente de nombreuses possibilités de réglage : la course des vérins 41 et 42 permet d'ajuster l'angle de traverse des corps 20 et la position de l'axe 35 permet l'ajustement de la largeur de travail sans modifier l'angle des corps. La charrue trouve alors un large domaine d'emploi.

## Revendications

1. Charrue à corps (20) de labour symétriques comportant un bâti (2) porte-corps et une structure (1) d'attelage du bâti à un tracteur agricole, caractérisée en ce que le bâti (2) est constitué par deux montants parallèles (15, 16) et par des traverses (17) s'étendant entre les montants et articulées à chacun d'eux par leurs extrémités correspondantes autour d'un axe (18, 19) perpendiculaire au plan des montants (15, 16), chaque traverse (17) formant un support de corps (20) de labour, le bâti (2) étant attelé à la structure d'attelage (1) par des moyens (5, 6, 7, 8, 13, 14, 33, 120, 219, 218, 129, 130) d'articulation et de guidage permettant au bâti (2) de prendre, dans le plan des montants (15, 16), plusieurs orientations et configurations, et par des moyens (23, 24, 123, 124, 126, 128) pour immobiliser le bâti (2) sur la structure (1) dans au moins trois de ces configurations et orientations.

2. Charrue selon la revendication 1 caractérisée en ce que les moyens d'articulation et de guidage comprennent au moins un pivot (14, 218, 219) d'articulation perpendiculaire au plan du bâti (2).

3. Charrue selon la revendication 2, caractérisée en ce que le pivot (14) est situé entre une partie (12) de la structure (1) surplombant le bâti (2) et une traverse (17) de ce bâti (2).

4. Charrue selon la revendication 3, caractérisée en ce que les moyens d'articulation et de guidage comportent en outre une bielle (33) articulée entre la structure (1) et un montant (15) du bâti (2).

5. Charrue selon la revendication 4, caractérisée en ce que le pivot (35) d'articulation de la bielle (33) sur la structure (1) est réglable en position.

6. Charrue selon la revendication 4 ou la revendication 5, caractérisée en ce que la bielle (33) est de longueur réglable.

7. Charrue selon la revendication 3, caractérisée en ce que la structure d'attelage (1) possède deux glissières (5, 6) chacune constituant un organe de guidage du montant (15, 16) correspondant dans un plan parallèle au plan du bâti (2) lors de sa rotation autour de son articulation (13, 14) à la structure d'attelage (1) et formant les moyens de détermination des configurations possibles du bâti (2).

8. Charrue selon la revendication 2, caractérisée en ce que le bâti (2) est articulé à la structure d'attelage (1) par au moins un pivot fixe (218, 219) et au moins un pivot mobile (121) par rapport à cette structure.

9. Charrue selon l'une quelconque des revendications précédentes, caractérisé en ce qu'elle comporte des moyens (23, 24) de manoeuvre du bâti (2) par rapport à la structure (1) comprenant au moins un vérin articulé (23, 24, 41, 42)entre la structure (1) d'attelage et le bâti (2) qui constitue également les moyens d'immobilisation réglable de l'un par rapport à l'autre.

10. Charrue selon l'une quelconque des revendications précédentes caractérisée en ce que la structure d'attelage (1) comporte une prolongation arrière (25) équipée à l'extérieur du volume balayé par le bâti (2), d'un essieu de roulement de la charrue sur le sol labouré, et des moyens (27) pour l'attelage d'un outil traîné derrière la prolongation (25).
